# EUROPEAN PATENT APPLICATION

(11) **EP 3 511 790 A1**
(43) Date of publication of application: **17.07.2019**
(21) Application number: 18195771.3
(22) Date of filing: 20.09.2018
(51) Int. Cl.: G05B 19/4099, G06T 17/10, G06T 19/20

(54) **INFORMATION PROCESSING APPARATUS, INFORMATION PROCESSING METHOD, AND COMPUTER PROGRAM PRODUCT**

(30) Priority: 11.01.2018 JP 2018002980
(71) Applicant: Ricoh Company, Ltd., Tokyo 143-8555 (JP)
(72) Inventor: ISOBE, Megumi, Tokyo, 143-8555 (JP); TANAKA, Hideki, Tokyo, 143-8555 (JP); SAKAMOTO, Tsuyoshi, Tokyo, 143-8555 (JP); ARAGAKI, Kohji, Tokyo, 143-8555 (JP); TOSEN, Shintaro, Tokyo, 143-8555 (JP)
(74) Representative: J A Kemp

(57) **Abstract**

An information processing apparatus (10) for generating a toolpath of a three-dimensional fabrication apparatus (20) includes circuitry (101) to slice three-dimensional data of a three-dimensional object into a plurality of parallel planes to generate a first image slice and a second image slice, extract a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object, correct a third contour of a third image slice disposed between the first image slice and the second image slice based on the first contour of the fist image slice and the second contour of the second image slice, and create a toolpath from the first contour, the second contour, and the third contour.

## Description

### BACKGROUND

### Technical Field

Aspects of the present disclosure relate to an information processing apparatus, an information processing method, and a computer program product.

### Related Art

Apparatuses are known that perform three-dimensional fabrication by sequential lamination to produce a three-dimensional object (3D object) constituting a three-dimensional model of the 3D object. A lamination fabrication method employed by these apparatuses slices three-dimensional data of the 3D object into a plurality of thin parallel planes, superimposes thin planes (thin plates) to generate original data used in the fabrication of the 3D object, and laminates material such as powder, resin, steel plate, paper, or the like to produce the 3D object. As such a lamination fabrication method, an inkjet method, a powder method, a stereo-lithography method, a sheet lamination method, an extrusion method, and the like are known.

Moreover, a lamination fabrication method is known in which vaporized solvent is made to penetrate a surface of a 3D object to flatten the 3D object and soften modeling material at the surface of the 3D object to smooth the surface of the 3D object (see, Japanese Translation of PCT International Application Publication No. JP-T-2005-523177).

However, depending on the resolution of the image slices, toolpath of a three-dimensional fabrication apparatus created from image slices has portions that are formed discontinuously even where the surface of the object changes continuously.

### SUMMARY

An object of the present disclosure is to provide a lamination fabrication method of fabricating a 3D object that forms a smooth surface at portions in which the object surface changes continuously.

In an aspect of this disclosure, a novel information processing apparatus for generating a toolpath of a three-dimensional fabrication apparatus is provided. The information processing apparatus includes circuitry to slice three-dimensional data of the three-dimensional object into a plurality of parallel planes to generate a first image slice and a second image slice, each of the first image slice and the second image slice being one of the plurality of parallel planes, extract a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object, correct a third contour of a third image slice disposed between the first image slice and the second image slice based on the first contour of the fist image slice and the second contour of the second image slice, and create a toolpath from the first contour, the second contour, and the third contour.

In another aspect of this disclosure, a novel information processing method for generating a toolpath of a three-dimensional fabrication apparatus is provided. The information processing method includes slicing three-dimensional data of a three-dimensional object into a plurality of parallel planes to generate a first image slice and a second image slice, each of the first image slice and the second image slice being one of the plurality of parallel planes, extracting a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object, correcting a third contour of a third image slice disposed between the first image slice and the second image slice based on the first contour of the fist image slice and the second contour of the second image slice, and creating a toolpath from the first contour, the second contour, and the third contour.

In still another aspect of this disclosure, a novel computer program product including a non-transitory computer-readable medium containing an information processing program is provided. The computer program product causing a device to perform: slicing three-dimensional data of a three-dimensional object into a plurality of parallel planes to generate a first image slice and a second image slice, each of the first image slice and the second image slice being one of the plurality of parallel planes, extracting a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object, correcting a third contour of a third image slice disposed between the first image slice and the second image slice based on the first contour of the fist image slice and the second contour of the second image slice, and creating a toolpath from the first contour, the second contour, and the third contour.

The lamination fabrication method according to the present embodiment can form a 3D object including a smooth surface at a portion in which a surface changes continuously in the original data.

### BRIEF DESCRIPTION OF THE DRAWINGS

FIG. 1 is a schematic view of an example of a three-dimensional printing system according to an embodiment of the present disclosure;
FIG. 2 is a block diagram illustrating a hardware configuration example of an information processing apparatus according to an embodiment of the present disclosure;
FIG. 3 is a block diagram illustrating an example of a functional configuration of the information processing apparatus according to the present disclosure;
FIG. 4 is a flowchart of a process of creating a toolpath according to the present disclosure;
FIGS. 5A through 5C illustrate a method of creating a toolpath from a contour of an image slice according to the present disclosure;
FIGS. 6A through 6D illustrate a method of excluding pixels from a contour of an image slice according to the present disclosure;
FIGS. 7A and 7B illustrate an example of a toolpath illustrating a portion in which the surface changes discontinuously even though the surface changes continuously in original data;
FIG. 8 illustrates a method of correcting a toolpath for forming a contour according to the present disclosure;
FIG. 9 is a flowchart for obtaining coordinates after correcting the toolpath according to the present disclosure; and
FIGS. 10A and 10B illustrate an example of correcting a toolpath for forming a contour according to the present disclosure.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in an analogous manner, and achieve similar results.

Although the embodiments are described with technical limitations with reference to the attached drawings, such description is not intended to limit the scope of the disclosure and all the components or elements described in the embodiments of this disclosure are not necessarily indispensable. As used herein, the singular forms "a", "an", and "the" are intended to include the plural forms as well, unless the context clearly indicates otherwise.

Embodiments of the present disclosure are described below with reference to the attached drawings.

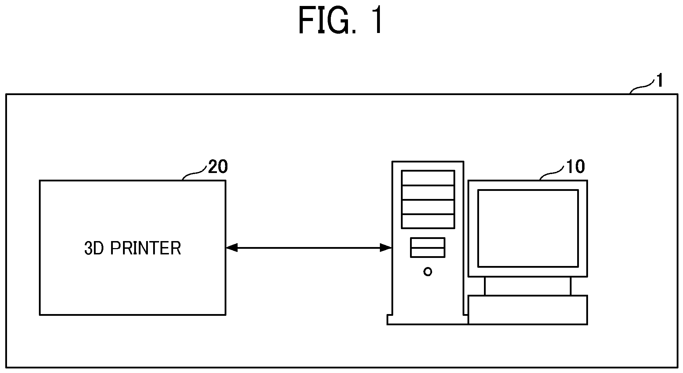

FIG. 1 is a schematic view of an example of a three-dimensional printing system according to an embodiment of the present disclosure. As illustrated in FIG. 1, the three-dimensional printing system (3D printing system) 1 according to the present embodiment includes an information processing apparatus 10 and a three-dimensional printer 20 (3D printer).

The information processing apparatus 10 is a general-purpose computer such as a personal computer (PC) or the like and is a device that implements certain functions by executing one or more programs (described below). As another example, the information processing apparatus 10 may be a tablet terminal, a smartphone, a PDA (Personal Digital Assistant), a mobile phone, a wearable PC, a game machine, a car navigation terminal, an electronic white board, or a projector, for example.

The 3D printer 20 is, for example, an apparatus for fabricating a three-dimensional object (3D object) by extrusion (fused deposition modeling (FDM) method), for example. The 3D printer 20 receives data transmitted from the information processing apparatus 10 and laminates fabrication layers based on the data to form the 3D object. The information processing apparatus 10 and the 3D printer 20 may be connected via a local area network (LAN), a wide area network (WAN), the Internet, or the like. Further, the information processing apparatus 10 and the 3D printer 20 may be connected via a universal serial bus (USB) cable or the like. The connection may be established by wire or part or all may be constructed wirelessly.

The information processing apparatus 10 analyzes three-dimensional data (3D data) to construct a three-dimensional model (3D model) and slices the 3D model at equal intervals with a predetermined lamination thickness (lamination pitch) to generate slice data. The information processing apparatus 10 generates a toolpath based on the slice data and transmits the toolpath to the 3D printer 20. The toolpath may be provided to the 3D printer 20 in a state stored in a recording medium such as a USB memory or a secure digital (SD) memory card. The 3D printer 20 may read the print data from the recording medium attached to a recording medium interface (recording medium I/F).

The lamination fabrication method slicing the three-dimensional data of the 3D object into a plurality of parallel planes (plates) to generate a plurality of image slice, superimposes these thin planes (plates) to generate original data used in fabrication of the 3D object, and laminates material such as powders, resin, steel plate, paper, or the like to produce the 3D object.

Note that the information processing apparatus 10 and the 3D printer 20 may be configured as a single unit. That is, the 3D printer 20 may have a function of the information processing apparatus 10 and may perform a process such as generating the toolpath from the 3D data.

The 3D printer 20 fabricates the 3D object based on the toolpath. A material extrusion deposition method (FDM method), a material jetting method, a binder jetting method, a selective laser sintering (SLS) method, a stereolithography (SLA) method, and the like, are available as fabrication method used in the 3D printer 20. The material extrusion deposition method (FDM method) extrudes thermally melted resin through a nozzle and laminates layers of thermally melted resin to fabricate the 3D object. In addition to resin, a fluid material such as metal may use as a material of the 3D printer 20. The material jetting method discharges resin from an inkjet head and cures the resin with ultraviolet rays and laminates layers of cured resin. The binder jetting method discharges a liquid of binder from an inkjet head to cure gypsum or resin powder one by one. The SLS method irradiates a powdery material with a laser to sinter the powdery material. The SLA method cures liquid photocurable resin with an ultraviolet laser and laminates layers of cured resin one by one to fabricate the 3D object.

In the present embodiment, for convenience of explanation, the 3D printer 20 of the material extrusion deposition method (FDM method) is described below as an example. A method of changing the toolpath of the present embodiment may be applied to change the toolpath for each fabrication methods.

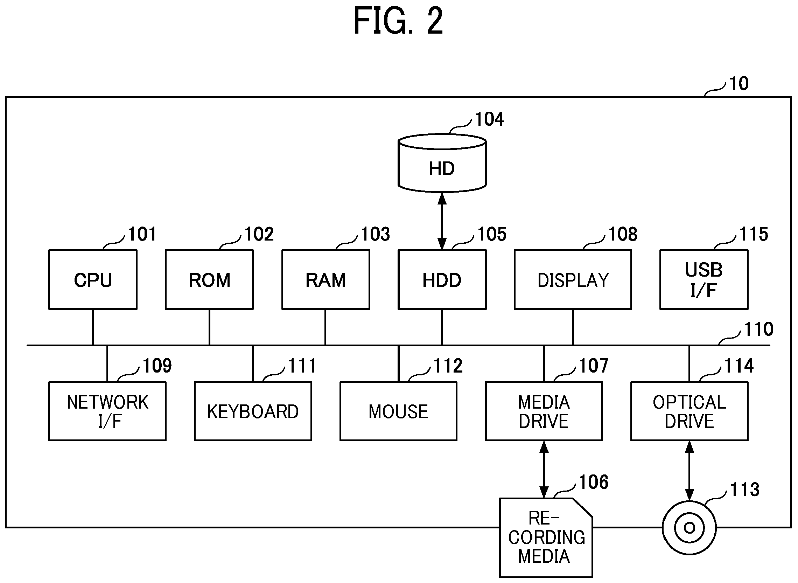

FIG. 2 is a block diagram illustrating a hardware configuration of an example of the information processing apparatus 10 according to the present embodiment. The information processing apparatus 10 includes a central processing unit (CPU) 101, a read only memory (ROM) 102, a random access memory (RAM) 103, a hard disk (HD) 104, a hard disk drive (HDD) 105, a display 108, a network I/F 109, a keyboard 111, a mouse 112, a media drive 107, an optical disk 113, an optical drive 114, a USB interface (USB I/F) 115, and a bus line 110 such as an address bus or a data bus for electrically connecting the above-described elements.

The CPU 101 controls the entire operation of the information processing apparatus 10. The CPU 101 serving as circuitry to extract the corner pixels and create the toolpath. The ROM 102 stores programs and data for operating the CPU 101. The RAM 103 is used as a work area for the CPU 101. The HD 104 stores programs, an operating system (OS), and various data. The HDD 105 controls reading or writing of various types of data from and to the HD 104 according to the control of the CPU 101. The network I/F 109 is an interface for performing data communication using a network.

The keyboard 111 is a device including a plurality of keys for the user to input characters, numerical values, various instructions, and the like. The mouse 112 is a device for the user to select various instructions, execute selected instructions, select a process target, move a cursor, and the like. The media drive 107 controls reading or writing (storing) of data from or to the recording medium 106 such as a flash memory. The optical drive 114 controls reading or writing of various data with from or to the optical disk 113 such as a compact disc read-only memory (CD-ROM), a digital versatile disk or DVD (trademark), and a Blu-ray Disc (trademark), etc. as an example of a detachable recording medium. The display 108 displays various information such as a cursor, a menu, a window, characters, images, and the like. The display 108 may be a projector or the like. The USB I/F 115 is an interface for connecting a USB cable, a USB memory, or the like.

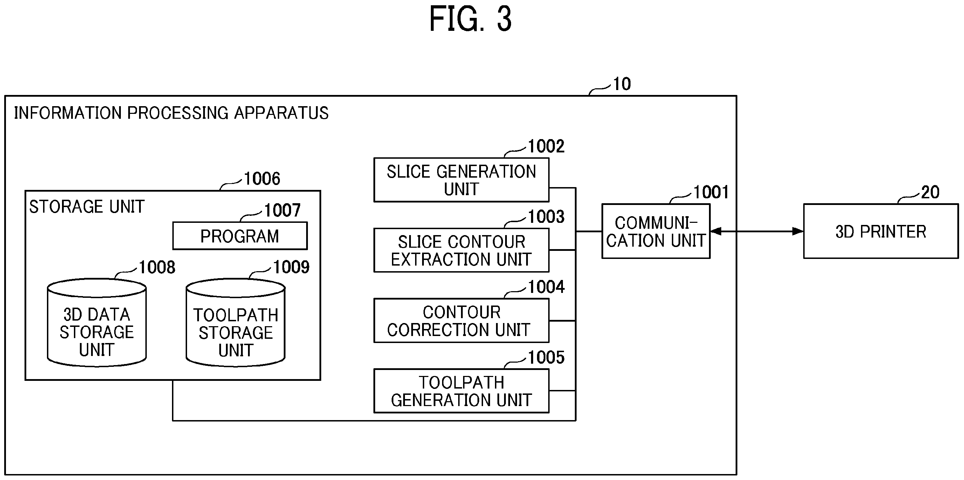

FIG. 3 is a block diagram illustrating an example of a functional configuration of the information processing apparatus 10 according to the present embodiment. As illustrated in FIG. 3, the information processing apparatus 10 includes a communication unit 1001, a slice generation unit 1002, a slice contour extraction unit 1003, a contour correction unit 1004, a toolpath generation unit 1005, and a storage unit 1006. The storage unit 1006 includes a program 1007, a 3D data storage unit 1008, and a toolpath storage unit 1009. Each functional unit of the information processing apparatus 10 is implemented by the CPU 101 that executes the program 1007 expanded to the RAM 103 from the HD 104 as illustrated in FIG. 2.

The communication unit 1001 is implemented by the network I/F 109 or the USB I/F 115 illustrated in FIG. 2. The communication unit 1001 transmits print data such as a toolpath generated from the 3D data to the 3D printer 20.

The slice generation unit 1002 acquires 3D data from the 3D data storage unit 1008 and generates image slices. The 3D data of the 3D object to be fabricated is sliced for each predetermined lamination thickness to generate image slices. The image slices are generated as many as the number of layers to be laminated.

The slice contour extraction unit 1003 extracts the contour of the 3D object to be fabricated in each image slice generated by the slice generation unit 1002. A contour is defined by a line connecting a plurality of corner pixels. A detailed description of contour correction is given below.

The contour correction unit 1004 corrects the contour by comparing the contour extracted by the slice contour extraction unit 1003 with the image slice of the upper layer or the lower layer of the extracted contour. A detailed description of contour correction is given below.

The 3D printer 20 includes a discharge nozzle from which material such as resin is discharged. The toolpath generation unit 1005 generates a toolpath including a trajectory of the discharge nozzle, a moving speed of the discharge nozzle, an amount of material discharged from the discharge nozzle, and the like of the 3D printer 20 based on the contour corrected by the contour correction unit 1004. One operation of the discharge nozzle is defined by three parameters of the trajectory of the discharge nozzle, the moving speed of the discharge nozzle, and an amount of material suppled to the discharge nozzle (amount of material discharged from the discharge nozzle). The trajectory of the discharge nozzle, the moving speed of the discharge nozzle, and the amount of material supplied to the discharge nozzle may be collectively referred to as the "tool-pass".

The storage unit 1006 includes a program 1007 for implementing each functional unit, a 3D data storage unit 1008 for holding 3D data of the 3D object to be fabricated, and a toolpath storage unit 1009 for holding a toolpath to be output to the 3D printer 20. The storage unit 1006 supplies necessary data to each functional unit according to the control of the CPU 101.

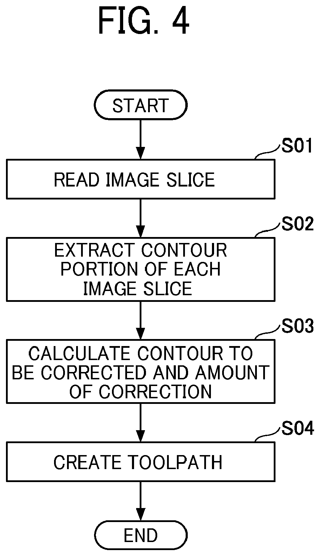

FIG. 4 is a flowchart of a process of creating the toolpath according to the present embodiment. The information processing apparatus 10 generates the image slices from 3D data and further generates a toolpath to be used for printing the 3D object by the 3D printer 20.

In step S01, the slice generation unit 1002 acquires 3D data from the 3D data storage unit 1008 and slices 3D data of the 3D object to be fabricated into a plurality of parallel planes for predetermined lamination thickness to generate an image slice. Each of the image slices is a cross-section of the plurality of parallel planes. The image slices are generated by the number of layers to be laminated and are output to the slice contour extraction unit 1003.

Next, in step S02, the slice contour extraction unit 1003 extracts a contour of each image slice. In step S03, the contour to be corrected and the amount of correction are calculated based on the contour extracted for each image slice in step S02. In step S04, the toolpath generation unit 1005 creating a toolpath from the contours corrected in each image slice based on the correction target and the amount of correction calculated in step S03.

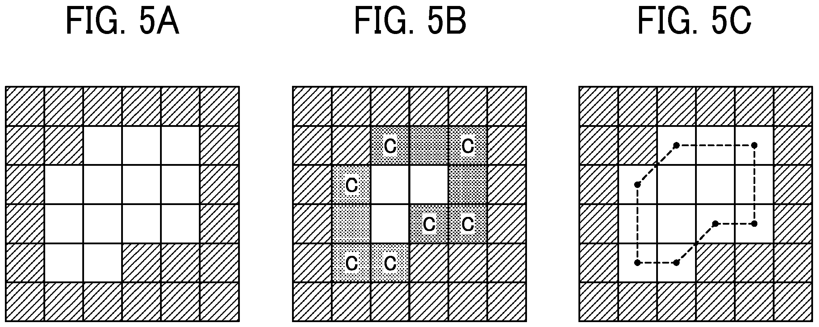

FIGS. 5A through 5C illustrate a method of creating a toolpath from a contour of an image slice according to the present embodiment. FIGS. 5A through 5C illustrate a method of specifying a corner pixel from the contour of the image slice and extracting the contour of the image slice.

FIG. 5A is an example of an image slice. Blank (white) pixels illustrated in FIG. 5A are disposed interior of the 3D object, and black (hatched) pixels in FIG. 5A are disposed outside of the 3D object.

FIG. 5B illustrates pixels to be a contour and a corner in the image slice.

In FIG. 5B, shaded (shaded with dots) pixels are the contour, and the shaded pixels indicated by "C" are corner pixels. The shaded pixels of the contour and blank (white) pixels are the pixels inside the 3D object. Hatched (hatched with diagonal lines) pixels are the pixels outside the 3D object. As illustrated in FIGS. 5A through 6C, there are eight pixels surrounding one central pixel in eight directions. The pixels of the contour are central pixels inside the 3D object and are adjacent to the pixels outside the 3D object. That is, there is at least one pixel outside the 3D object among the eight pixels surrounding the each of the central pixels of the contour. Hereinafter, the eight pixels surrounding each of the central pixels of the contour are referred to as "8-connected pixels" (also known as the Moore neighborhood).

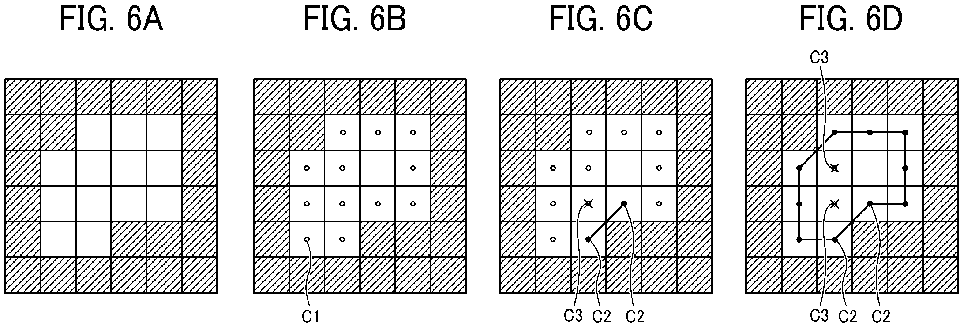

Thus, the pixels of the contour can be obtained by a known method of extracting the contour of the image. Each of the corner pixels is adjacent to the pixels outside the 3D object among the 8-connected pixels in a vertical, a horizontal, and a diagonal direction among the eight directions. A direction of the toolpath of the successive contour changes at the corner pixels. If there are two pixels (first and second pixels) of the contour adjacent to each other in the diagonal direction, and if there is a third pixel adjacent to both the two pixels (first and second pixels) of the contour potion, the third pixel may be excluded from the contour. A detail of an exclusion process is described in FIGS. 6A through 6D.

FIG. 5C illustrates a toolpath for forming a contour of the 3D object. The toolpath is created by continuously and annularly connecting the corner pixels obtained in FIG. 5B with a line so that the line forms a ring- (loop-) shaped contour that divides an area of the image slice in the XY-plane into the area inside the 3D object (inside the ring) and the area outside the 3D object (outside the ring). The information processing apparatus 10 can obtain a X-coordinate and a Y-coordinate on the toolpath from a X-coordinate and a Y-coordinate on the image slice of each pixels. The X-coordinate and the Y-coordinate constitute the XY-plane (plane) of the image slice. Thus, the information processing apparatus 10 can calculate the coordinate in the toolpath from the coordinate of the corner pixels in the image slice and can designate the calculated coordinate to be a start point or an end-point of the toolpath.

FIGS. 6A through 6D illustrate a method of excluding pixels from a contour of an image slice according to the present embodiment.

FIG. 6A is an example of an image slice. Blank (white) pixels illustrated in FIG. 6A are disposed interior of the 3D object, and black (shaded) pixels in FIG. 6A are disposed outside the 3D object.

FIG. 6B illustrates pixels to be a contour and the corner pixels in the image slice. In FIG. 6B, pixels C1 with circles inside are candidates for contour. As illustrated in FIG. 6C, there are two pixels C2 (first and second pixels) of the contour adjacent to each other in the diagonal direction. Further, there is a third pixel C3 adjacent to both the two pixels C2 (first and second pixels) of the contour. The third pixel C3 is indicated by a circle with a cross (crossed circle) in FIG. 6C. The third pixel C3 is excluded from the contour. As illustrated in FIG. 6D, there are two third pixels C3 that are excluded from the contour.

Then, as illustrated in FIG. 6D, the toolpath is created by connecting the corner pixels obtained in FIG. 6C with a line.

In this way, the present embodiment can extract the corner pixels and create the toolpath.

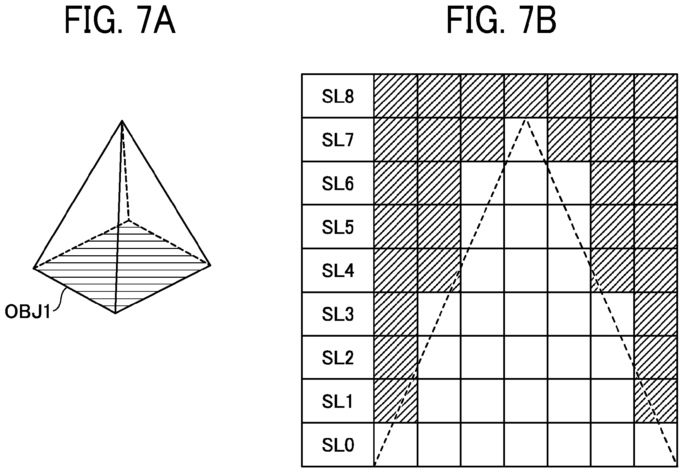

FIGS. 7A and 7B illustrate an example of a toolpath illustrating a portion in which the surface changes discontinuously even though the surface changes continuously in the original data. More specifically, FIGS. 7A and 7B illustrate a toolpath that changes discontinuously in a portion in which the object surface changes continuously in the original data (indicated by dotted line) when generating a toolpath of the 3D object having a shape of a quadrangular pyramid.

FIG. 7A is a perspective view of a quadrangular pyramid OBJ1 as an example of the 3D object. FIG. 7B is as schematic view of image slices SL0 to SL8 from the 3D object OBJ1. FIG. 7B is a side view of the superimposed image slice generated from the 3D object OBJ1. Dotted line in FIG. 7B illustrates an actual contour as seen from the side of the 3D object OBJ1. Image slices SL0 to SL8 correspond to eight layers of image slices, respectively. White pixels indicate the inside of the 3D object, and black pixels indicate the outside of the 3D object.

When generating the image slices, it is determined whether the pixel belongs to the pixels inside the 3D object (white pixel) or the pixels outside the 3D object (black (hatched) pixel) for each pixel in the image slices. The method of determination depends on the method used for generating the image slices.

It is determined whether the pixel belongs to the pixel inside the 3D object or the pixel outside the object according to an actual occupancy rate of an area inside the 3D object and an area outside the 3D object in each pixel. Thus, the image slice of a lower layer and the image slice of an upper layer may coincide at a portion in which the surface of the 3D object changes continuously that is the portion in which a change of a shape of the contour of the actual 3D object in an XY plane between the lamination layers is smaller than the resolution of the image slices. Here, the resolution of the image slice is a size of an actual area corresponding to one pixel of the image slice. In FIG. 7B, the image slices SL1 to SL3 match the image slices SL4 to SL6.

When the toolpath is created from the image slices obtained as described above by the method of creating the toolpath as described in FIGS. 5A through 5C, the surface of the 3D object may have a stepped shape. The stepped shape is generated by laminating layers of material having the same shape since the surfaces of the image slices are the same over the plurality of layers at the portion in which the surface of the 3D object continuously (smoothly) changes in the original data.

Returning to FIG. 4, in step S03, the contour to be corrected and an amount of correction are calculated based on the contour extracted for each image slice in step S02.

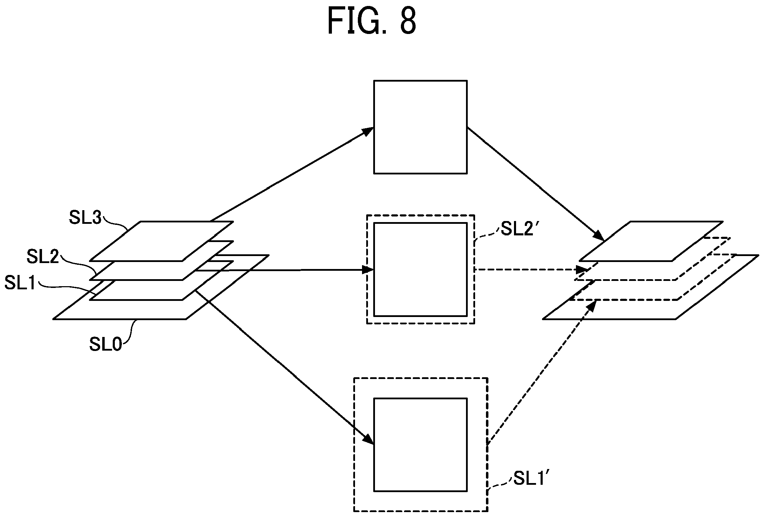

FIG. 8 illustrates a method of correcting a toolpath for forming a contour according to the present embodiment. Specifically, FIG. 8 illustrates an example of the method of correcting the toolpath for forming the contours of image slices SL0 to SL3 illustrated in FIG. 7B.

Each of the image slices SL1 to SL3 illustrated in FIG. 7B has the same shape of contour. The image slices SL1' and SL2' are generated by correcting the start point and the end-point of the toolpath so that the image slices SL1 and SL2 smoothly change between each layer of SL0 to SL3. As illustrated in FIG. 8, the 3D object formed by the image slices SL0, SL1', SL2', and SL3 has a smooth surface even at the portion in which the surface changes continuously in the original data.

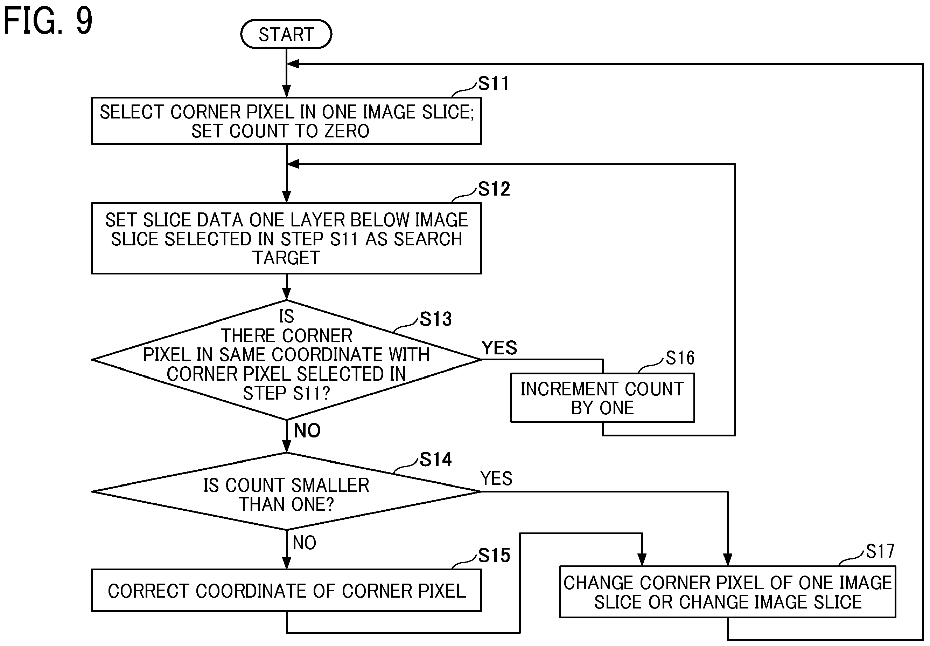

FIG. 9 is a flowchart for obtaining coordinates after correcting the toolpath according to the present embodiment. The contour correction unit 1004 (see FIG. 3) performs each process in the flowchart illustrated in FIG. 9.

In step S11, the contour correction unit 1004 selects the image slice from which the contour output from the slice contour extraction unit 1003 is extracted and selects one corner pixel in the selected image slice, and the contour correction unit 1004 sets the Count to zero.

In the following step S12, the contour correction unit 1004 sets the image slice one layer below the image slice selected in step S11 as a search target.

In the following step S13, the contour correction unit 1004 determines whether there are the corner pixels of the image slice set as the search targeted in step S12 in the same coordinate with the corner pixel selected in the step S11. If the determination is YES, Count is incremented by one in step S16, and the process returns to step S12. If the determination is NO, the process proceeds to step S14.

In the following step S14, the value of Count is determined. When Count is smaller than one, the contour correction unit 1004 determines that no corner pixel exists in the same coordinate of the image slice set as the search targeted in step S12. Then, in step S17, the contour correction unit 1004 changes the corner pixel selected in step S11 or selects the image slice one layer below the image slice set in step S12 (change image slice) when all the corner pixels in the image slice selected in step S11 have been selected. Then, the process proceeds to step S11. However, the corner pixel, the coordinate of which is corrected in step S15, is not selected in step S11 when selecting the image slice of one layer below the image slice set in step S12. If Count is one or more, the process proceeds to step S15.

In step S15, the contour correction unit 1004 corrects the coordinate of the corner pixel of the image slice in which the corner pixel exists in the same coordinate with the corner pixel selected in step S11 based on a position of the corner pixel selected in step S11 and the corner pixel positioned at the 8-connected pixels of the corner pixel in the image slice of the search target. Thus, the contour correction unit 1004 corrects the coordinate of the corner pixel of the contour to be corrected (third contour) to approach a contour of original data of the three-dimensional object.

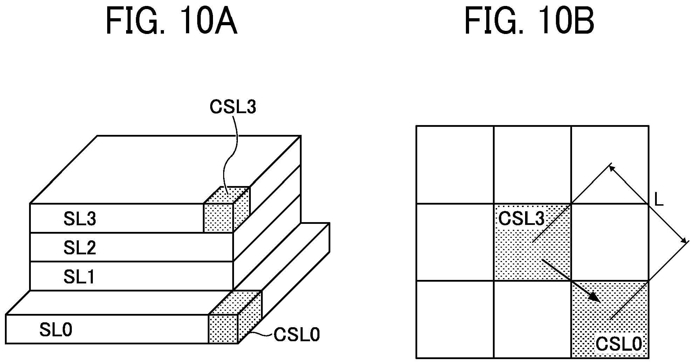

FIGS. 10A and 10B illustrate an example of correcting a toolpath for forming a contour according to the present embodiment. In FIGS. 10A and 10B, the process of step S15 illustrated in FIG. 9 is described.

FIG. 10A illustrates the image slices of plurality of layers and corner pixels in a portion in which a surface of the 3D object changes continuously. CSL3 is a corner pixel in the image slice SL3, and CSLO is a corner pixel of the image slice SL0. FIG. 10B illustrate a positional relationship between CSL3 and CSLO on the XY plane. An image slice is created in a portion in which the surface of the 3D object changes continuously.

The image slice in the portion includes the corner pixel in the coordinate of the 8-connected pixels of the original corner pixel after the image slices, in which the corner pixel is extracted in the same coordinate, are successively created for plurality of layers. It is because that a pixel in the contour of the 3D object changes only by one in a portion in which a change in the contour of the 3D object between the lamination layers on the XY plane is smaller than the resolution of the image slice, that is, the size of the area of the actual 3D object represented by one pixel of the image slice.

Here, "L" is a distance between a center of CSL3 and a center of CSLO on the XY plane. A difference of number of layers of the image slices CSL3 and CSLO is three. Then, the contour correction unit 1004 corrects (shifts) a position of the corner pixel of the image slice SL2 positioned in the same coordinate with the CSL3 to a position in a direction of CSLO (in a lower right direction) by L / 3 from the original coordinate. Further, the contour correction unit 1004 corrects (shifts) a position of the corner pixel of the image slice SL1 positioned in the same coordinate with the CSL3 to a position in a direction of CSLO (in a lower right direction) by 2 × L / 3 from the original coordinate.

As described above, "L" is the distance between a first corner pixel and a second corner pixel positioned in the 8-connected pixels of the first corner pixel on XY plane. The layer of the image slice of the corner pixel disposed N-layer below the layer of the image slice of the first corner pixel. Then, an amount of correction of the corner pixel in the same coordinate with the first corner pixel is calculated as n × L / N. The layer of the image slice of the corner pixel is disposed N-layers below the layer of the image slice of the first corner pixel. "n" is an order (number) of the layer of the image slice, the contour of which is to be corrected, from the first image slice. "n" is an integer taking values from 1 to N-1. The direction is corrected in a direction of the corner pixel positioned in the vicinity of 8-connected pixels of the image slice existing N-layers below the layer of the image slice of the first corner pixel.

Return to FIG. 9. In step S15, the contour correction unit 1004 corrects the coordinate of the corner pixels of the image slice in which the corner pixels exist at the same coordinate with the corner pixels selected in step S11. Then, in step S17, the contour correction unit 1004 changes the corner pixel selected in step S11 or selects the image slice one layer below the image slice set in step S12 (change image slice) when all the corner pixels in the image slice selected in step S11 have been selected. Then, the process proceeds to step S11. However, the corner pixel, the coordinate of which is corrected in step S15, is not selected in step S11 when selecting the image slice of one layer below the image slice set in step S12.

Noted that the processes described with reference to FIGS. 8 and 9 are a correction process that corrects a second corner pixel in a second image slice based on a first corner pixel in a first image slice positioned above the second image slice as a reference. When the first corner pixel in the first image slice is corrected based on the second corner pixel in the second image slice positioned below the first image slice as a reference, upper layer of the image slice is selected as the search target in step S12.

Return to FIG. 4. In step S04, the toolpath generation unit 1005 creates a toolpath from the contours corrected in each image slice based on the correction target and the amount of correction calculated in step S03. The generated toolpath is stored in the toolpath storage unit 1009 and transmitted to the 3D printer 20 via the communication unit 1001.

As described above, according to the present embodiment, the information processing apparatus 10 extracts the contour of the image slice from the 3D data and corrects the contour to approach the contour of the actual 3D object when the image slices each including the corner pixels in the same coordinate continuously exists.

Thus, the present embodiment can form a 3D object including a portion in which the surface of the 3D object changes continuously and smoothly.

In the embodiment of the present disclosure, the 3D printer 20 is an example of a three-dimensional fabricating apparatus. The corner pixels are examples of pixels in which a direction of the contour changes. The slice contour extraction unit 1003 is an example of a contour extraction unit.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information processing apparatus (10) for generating a toolpath of a three-dimensional fabrication apparatus (20), the information processing apparatus comprising circuitry (101) to:
slice three-dimensional data of a three-dimensional object into a plurality of parallel planes to generate a first image slice and a second image slice, each of the first image slice and the second image slice being one of the plurality of parallel planes;
extract a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object;
correct a third contour of a third image slice disposed between the first image slice and the second image slice based on the first contour of the fist image slice and the second contour of the second image slice; and
create a toolpath from the first contour, the second contour, and the third contour.

2. The information processing apparatus (10) according to claim 1, wherein the third contour of the third image slice includes a plurality of central pixels in the area inside the three-dimensional object and 8-connected pixels surrounding each of the plurality of central pixels in eight directions,
the circuitry (101) determines whether at least one of the 8-connected pixels is disposed outside the three-dimensional object to extract a plurality of corner pixels from the plurality of central pixels, and
a direction of the third contour changes in the third image slice at each of the plurality of corner pixels.

3. The information processing apparatus (10) according to claim 2, wherein the circuitry (101) continuously connects the plurality of corner pixels with a line to create the toolpath.

4. The information processing apparatus (10) according to claim 3, wherein the toolpath connecting the plurality of corner pixels forms a ring to divide the third image slice into the area inside the three-dimensional object and the area outside the three-dimensional object.

5. The information processing apparatus (10) according to claim 4, wherein the circuitry (101):
extracts a corner pixel from the first contour in the first image slice; and
determines whether the plurality of corner pixels of the third contour includes a corner pixel of same coordinates as the corner pixel of the first contour in the first image slice.

6. The information processing apparatus (10) according to claim 5, wherein the circuitry (101) extracts a corner pixel from the second contour in the second image slice, and
the corner pixel in the first contour is adjacent to the corner pixel in the second contour in one of the eight directions along a plane of the first image slice.

7. The information processing apparatus (10) according to claim 6, wherein the circuitry (101):
calculates a first distance between the corner pixel in the first contour in the first image slice and the corner pixel in the second contour in the second image slice along the plane;
divides the first distance by a difference of number of layers between the first image slice and the second image slice to calculate an amount of correction; and
corrects the coordinate of the corner pixel in the third contour in the third image slice based on the amount of correction.

8. The information processing apparatus (10) according to claim 7, wherein the circuitry (101):
corrects the coordinate of the corner pixel of the third contour to approach a contour of original data of the three-dimensional object; and
multiplies the amount of correction by a number of an order of the third image slice from the first image slice where the number of the order is an integer.

9. An information processing method for generating a toolpath of a three-dimensional fabrication apparatus, the information processing method comprising:
slicing three-dimensional data of a three-dimensional object into a plurality of parallel planes to generate a first image slice and a second image slice, each of the first image slice and the second image slice being one of the plurality of parallel planes;
extracting a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object;
correcting a third contour of a third image slice disposed between the first image slice and the second image slice based on the first contour of the fist image slice and the second contour of the second image slice; and
creating a toolpath from the first contour, the second contour, and the third contour.

10. The information processing method according to claim 9, wherein the third contour of the third image slice includes a plurality of central pixels in the area inside the three-dimensional object and 8-connected pixels surrounding each of the plurality of central pixels in eight directions,
the extracting determines whether at least one of the 8-connecting pixels is disposed outside the three-dimensional object to extract a plurality of corner pixels from the plurality of central pixels, and
a direction of the third contour changes in the third image slice at each of the plurality of corner pixels.

11. The information processing method according to claim 10, wherein the creating continuously connects the plurality of corner pixels with a line to create the toolpath.

12. The information processing method according to claim 11, wherein the toolpath connecting the plurality of corner pixels forms a ring to divide the third image slice into the area inside the three-dimensional object and the area outside the three-dimensional object.

13. The information processing method according to claim 12, wherein:
the extracting extracts a corner pixel from the first contour in the first image slice; and
the correcting determines whether the plurality of corner pixels of the third contour includes a corner pixel of same coordinates as the corner pixel of the first contour in the first image slice.

14. The information processing method according to claim 13, wherein the extracting extracts a corner pixel from the second contour in the second image slice, and
the corner pixel in the first contour is adjacent to the corner pixel in the second contour in one of the eight directions along a plane of the first image slice.

15. A computer program product comprising a non-transitory computer-readable medium (106, 113) containing an information processing program (1007), the computer program product causing a device to perform:
slicing three-dimensional data of a three-dimensional object into a plurality of parallel planes to generate a first image slice and a second image slice, each of the first image slice and the second image slice being one of the plurality of parallel planes;
extracting a first contour in the first image slice and a second contour in the second image slice, the first contour dividing the first image slice into an area inside the three-dimensional object and an area outside the three-dimensional object, the second contour dividing the second image slice into the area inside the three-dimensional object and the area outside the three-dimensional object;
correcting a third contour of a third image slice disposed between the first image slice and the second image slice based on the first contour of the fist image slice and the second contour of the second image slice; and
creating a toolpath from the first contour, the second contour, and the third contour.
